Europäisches Patentamt

European Patent Office

Office européen des brevets

(19)

(11) **EP 0 820 172 B1**

(12) **FASCICULE DE BREVET EUROPEEN**

(45) Date de publication et mention
de la délivrance du brevet:
**24.04.2002 Bulletin 2002/17**

(51) Int Cl.⁷: **H04L 27/26**

(21) Numéro de dépôt: **97117217.6**

(22) Date de dépôt: **16.01.1992**

(54) **Procédé de diffusion de données numériques entrelacées en temps et en fréquence, affectant une puissance supérieure aux éléments de référence, ainsi que l'émetteur correspondant**

Digitaldatenübertragungsverfahren mit Zeit-Frequenzverschachtelung unter Verwendung einer erhöhten Leistung für Referenzsymbole sowie entsprechender Sender

Methof of data broadcasting using time-frequency interleaving and assigning a higher power for reference symbols, as well as the corresponding transmitter

(84) Etats contractants désignés:
**DE ES GB IT NL SE**

(30) Priorité: **17.01.1991 FR 9100654**

(43) Date de publication de la demande:
**21.01.1998 Bulletin 1998/04**

(62) Numéro(s) de document de la (des) demande(s)
initiale(s) en application de l'article 76 CBE:
**92460002.6 / 0 499 560**

(73) Titulaires:
• **FRANCE TELECOM**
**75015 Paris (FR)**
• **TELEDIFFUSION DE FRANCE**
**75732 Paris Cédex 15 (FR)**

(72) Inventeurs:
• **Rault, Jean-Christophe**
**35000 Rennes (FR)**
• **Le Floch, Bernard**
**35250 St. Sulpice la Foret (FR)**
• **Helard, Jean-François**
**35700 Rennes (FR)**
• **Castelain, Damien**
**35000 Rennes (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
**US-A- 4 002 970**

• **AIICHIRO TSUZUKU, YOSHIHIKO ISHIKAWA: "Mobile teletext reception using signal processing in frequency domain" IEEE GLOBAL TELECOMMUNICATIONS CONFERENCE 1989, 27 - 30 novembre 1989, pages 423-427, XP000091139 New York, US**
• **LASSALLE, ALARD: "Principles of modulation and channel coding for digital broadcasting for mobile receivers" EBU REVIEW- TECHNICAL., no. 224, août 1987, pages 168-190, XP000560523 BRUSSELS, BE**

## Description

Le domaine de l'invention est celui de la diffusion de données numériques destinées à être reçues notamment par des mobiles circulant en milieu urbain, c'est-à-dire dans des conditions de multipropagation (processus de Rayleigh) engendrant des phénomènes d'évanouissement (fading), et en présence de parasites et de brouillage. Plus généralement, l'invention concerne la diffusion de signaux numériques dans des canaux affectés de trajets multiples dont les caractéristiques varient dans le temps.

L'invention s'applique plus particulièrement, mais non exclusivement, au système de radiodiffusion sonore numérique dénommé système COFDM (Coding Orthogonal Frequency Division Multiplex (Multiplexage de Fréquences Orthogonales Codées)), tel que décrit dans les brevets français 86 09622 du 2 juillet 86, et 86 13271 du 23 septembre 86 au nom des mêmes déposants.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur N voies de diffusion parallèles au moyen d'un multiplex de fréquences utilisant des porteuses orthogonales. En particulier, ce type de modulation permet d'éviter que deux éléments successifs du train de données soient émis à la même fréquence.

Le processus de codage connu vise dans son ensemble à permettre le traitement des échantillons issus du démodulateur pour absorber l'effet des variations d'amplitude du signal reçu, dues au processus de Rayleigh. Le codage est avantageusement un codage convolutif, éventuellement concaténé à un codage du type Reed-Solomon. Le décodage peut être avantageusement un décodage de Viterbi à décision douce.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

La démodulation du signal reçu peut être différentielle ou cohérente.

L'intérêt de la démodulation différentielle réside essentiellement dans sa simplicité de mise en oeuvre et son absence d'inertie après un évanouissement profond. C'est cette approche qui a été utilisée pour valider les principes généraux du système COFDM.

La démodulation cohérente offre, en théorie, une meilleure résistance au bruit que la démodulation différentielle, permettant d'obtenir un gain en performance d'environ 3 dB. Toutefois, il apparaît clairement que, dans des conditions de réception spécifiques aux systèmes de diffusion vers les mobiles en milieu perturbé, il est particulièrement difficile d'extraire du signal modulé une référence de phase et d'amplitude pour chaque porteuse du multiplex. L'erreur faite sur l'estimation des porteuses entraîne donc, dans le cas de la démodulation cohérente, une dégradation sensible des performances. Ceci est d'autant plus vrai dans le cas d'évanouissements profonds et rapides rencontrés lorsque la fréquence porteuse ou la vitesse du véhicule augmente.

En d'autres termes, la démodulation cohérente est en principe plus performante que la démodulation différentielle, mais nécessite que le dispositif de récupération de porteuse puisse fournir une bonne estimation de la réponse fréquentielle du canal à tout instant.

On connaît, par la demande de brevet FR 90 01491, du 06.02.90, au nom des mêmes déposants, un procédé de diffusion à entrelacement temps-fréquence permettant une démodulation cohérente, en prévoyant l'insertion parmi les éléments d'information utiles à transmettre d'éléments de référence de valeur et de position dans l'espace fréquence f- temps t connues des récepteurs.

L'idée de base de ce procédé consiste donc à utiliser certaines porteuses judicieusement réparties dans le domaine temps-fréquence comme fréquences pilotes de référence de phase et/ou d'amplitude. En d'autres termes, on insère parmi les données à transmettre et à des emplacements prédéterminés des mots fixes, servant de référence en amplitude et/ou en phase à la réception.

Ainsi, il est possible de déterminer, par interpolation, une référence de phase et d'amplitude pour chacun des éléments numériques, et donc de réaliser une démodulation cohérente.

Plus précisément, l'estimation de la réponse du canal est obtenue par un filtrage d'interpolation, soit par convolution circulaire, ainsi que cela est décrit dans la demande de brevet FR 90 01491 déjà mentionnée, soit par transformation de Fourier. Cette seconde solution présente l'avantage de nécessiter, à qualité égale, un nombre d'opérations inférieur à la première.

Toutefois, on constate que ces méthodes n'apportent pas en pratique des résultats satisfaisants. En effet, si le gain en faveur de la démodulation cohérente par rapport à la démodulation différentielle est théoriquement de 3 dB lorsque la réponse du canal est estimée de manière parfaite, il n'est en pratique que de l'ordre de 0,5 dB.

Ce mauvais résultat est dû essentiellement au fait que l'estimation de la réponse du canal est fortement entachée de bruit, ce qui nuit à la qualité de l'interpolation.

Dans le domaine des signaux monoporteuses, et plus précisément des signaux de télétexte transmis dans des signaux NTSC, il a été proposé par TZUZUKU et al. dans "Mobile teletext reception using signal processing in frequency domain" (IEEE Global Telecommunications Conference 1989, 27-30 nov. 89, pp. 423-427), d'émettre régulièrement une référence couvrant toute la bande passante ("chirp"). Cette approche n'est pas souhaitable dans le cas discuté plus haut d'un signal multiporteuse, pour lequel les références sont reparties, sans couvrir toute la bande passante, de façon, notamment, à ne pas réduire fortement le débit utile.

L'invention a notamment pour objectif de pallier cet inconvénient de l'état de la technique.

Plus précisément, l'invention a pour objectif de permettre une démodulation cohérente d'un signal numérique entrelacé en temps et en fréquence, présentant un gain important par rapport à la démodulation différentielle, de l'ordre de 2 dB.

L'invention a donc pour objectif de permettre une démodulation pour laquelle l'influence du bruit est réduite, et donc les résultats de l'interpolation améliorés.

Un autre objectif de l'invention est de fournir un procédé de diffusion, permettant, sans l'ajout d'éléments de référence supplémentaires, une interpolation de meilleure qualité à la reception.

Ces objectifs, ainsi que d'autres qui apparaîtront par la suite, sont atteints selon l'invention à l'aide d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément, ledit signal numérique comprenant des éléments de référence, de valeur et de position dans ledit espace temps-fréquence connues dudit dispositif de démodulation, comprenant des moyens d'émission desdites porteuses attribuant sélectivement aux porteuses portant des éléments de référence une puissance supérieure à celle utilisée pour les porteuses portant des éléments d'information utile.

En effet, l'objectif de l'invention est de faciliter la distinction des éléments de référence par rapport au bruit induit par le canal de transmission. Cela peut être réalisé à l'émission, en augmentant la puissance des éléments de référence. Il sera alors bien sûr plus facile de les distinguer à la réception.

D'autres caractéristiques et avantages de l'invention apparaîtront à la lecture de la description suivante d'un mode de réalisation préférentiel de l'invention, donné à titre d'exemple illustratif et non limitatif.

Le mode de réalisation qui va être décrit ci-après concernent plus particulièrement la radiodiffusion sonore numérique vers des mobiles.

Toutefois, il est clair que le principe de l'invention peut s'appliquer à tout type de récepteurs, dès lors que la diffusion des données se fait sous la forme de données numériques entrelacées en temps et en fréquence et que les données comprennent des éléments de référence.

L'invention s'applique notamment, mais non exclusivement, aux signaux émis selon le procédé décrit dans la demande de brevet FR 90 01491.

Dans l'application de radiodiffusion sonore numérique, un objectif peut être par exemple de transmettre seize programmes stéréophoniques dans une bande de fréquence de 8 MHz de largeur, avec un débit numérique de l'ordre de 250 kbits après compression par programme stéréophonique.

C'est notamment le cas du procédé de diffusion COFDM. Selon ce procédé, le signal émis est constitué par une suite de symboles de modulation formant un multiplex de N porteuses orthogonales.

Soit $\{f_k\}$ l'ensemble des fréquences porteuses considérées, avec :

$$f_k = k/t_s, \qquad k = 0 \text{ à } N\text{-}1$$

où $t_s$ représente la durée allouée à un symbole de modulation.

On peut alors définir la base de signaux élémentaires suivante :

$$\psi_{j,k}(t) \text{ avec } k = 0 \text{ à } N\text{-}1, j = -\infty \text{ à } +\infty :$$

$$\psi_{j,k}(t) = g_k(t - jt_s)$$

avec : $\quad 0 \leq t < t_s : \quad g_k(t) = e^{2i\pi f kt}$

$\qquad$ ailleurs : $\quad g_k(t) = 0$

Soit d'autre part un ensemble de nombres complexes $\{C_{j,k}\}$ prenant ses valeurs dans un alphabet fini, représentant le signal de données émis.

Le signal OFDM associé s'écrit alors :

$$x(t) = \text{Re}\left[e^{2i\pi f0t}\left(\sum_{j=-\infty}^{+\infty}\ \sum_{k=0}^{N-1}\ C_{j,k}\ \Psi_{j,k}(t)\right)\right]$$

Pour s'affranchir de tout problème de sélectivité en fréquence du canal, un intervalle de garde de durée $\Delta$ est insérée devant chaque signal $\psi_{j,k}(t)$, afin d'absorber le brouillage intersymboles.

$t_s$ représente désormais la durée du signal utile, $T_s = t_s + \Delta$, la durée du symbole, et $\Delta$ la durée de l'intervalle de garde.

On définit alors les signaux émis par la relation :

$$\psi_{j,k}(t) = g_k(t\text{-}jT_s)$$

avec :     $-\Delta \leq t < t_s$ :     $g_k(t) = e^{2i\pi fkt}$

ailleurs :     $g_k(t) = 0$

Le canal est modélisé par la relation :

$$Y_{j,k} = H_{j,k}.C_{j,k} + N_{j,k}$$

où :

$H_{j,k}$     est la réponse complexe du canal à la fréquence $f_k$ et à l'instant $jT_s$ ;

$N_{j,k}$     est un bruit gaussien complexe ;

$Y_{j,k}$     est le symbole obtenu après projection du signal COFDM reçu sur chaque porteuse k et à chaque instant j.

De façon à permettre une démodulation cohérente, le dispositif de récupération de porteuse utilisé en démodulation cohérente doit pouvoir fournir une estimation de la réponse du canal :

    $H_{j,k} = \rho_{j,k}\ e^{i\varphi j,k}$ pour tous les instants j et toutes les fréquences k, où : $\rho_{j,k}$ est l'amplitude et $\varphi_{j,k}$ est la phase de la réponse du canal.

Une façon avantageuse de le mettre en oeuvre consiste à utiliser certaines porteuses judicieusement équiréparties dans le domaine temps-fréquence, comme fréquences pilotes de référence de phase et d'amplitude. Ceci est tout à fait possible avec le système COFDM, du fait de la nature bidimensionnelle du signal émis.

Cela permet d'obtenir une estimation des $H_{j,k}$ pour certains instants et certaines fréquences correspondant à l'insertion de ces références.

L'estimation de la réponse du canal $H_{j,k}$ à tout instant $jT_s$ et pour toutes les fréquences $f_k$ est ensuite obtenue par filtrage d'interpolation.

Ce filtrage numérique peut être réalisé classiquement par un produit de convolution du signal d'entrée et de la réponse impulsionnelle du filtre. Chaque valeur de sortie est alors remplacée par la somme pondérée de ces voisins.

Il existe une autre façon avantageuse d'effectuer ce filtrage, qui utilise la propriété selon laquelle la Transformée de Fourier d'un produit de convolution est égale au produit des transformées. L'opération nécessite alors une Transformée de Fourier Discrète (TFD) directe (respectivement inverse), un fenêtrage (pondération) du signal que l'on veut interpoler, et une TFD inverse (respectivement directe).

L'insertion des porteuses de référence, à raison d'une référence toutes les R porteuses, permet au récepteur de disposer d'une estimation, entachée de bruit, de la réponse fréquentielle sous-échantillonnée du canal représentée par :

$$\bar{H}(\nu) \text{ pour } \nu = n.R \text{ } n : 0... (N\text{-}1)/R$$

avec : R - 1 : nombre de porteuses entre deux références

Il est donc nécessaire de déterminer le produit de convolution suivant, qui correspond au signal de sortie du filtrage de $\bar{H}(\nu)$ par un filtre à réponse impulsionnelle de support fini :

$$\hat{H}(k) = \sum_{v=0}^{N-1} H'(v) \cdot F(k - v) \qquad (1)$$

avec    $H'(v) = H(v)$    si $v = n.R$

       $H'(v) = 0$    sinon

et     $F(k - v)$ : coefficients du filtre passe-bas d'interpolation.

Les N échantillons estimés $\hat{H}(k)$ sont obtenus par une somme pondérée des échantillons $\hat{H}(v)$ voisins.

Etant donnés les suites de N points $H'(v)$ (réponse du canal dans le domaine fréquentiel) et $F(v)$ (réponse du filtre dans le domaine fréquentiel), dont les Transformées de Fourier inverses sont respectivement $h'(n)$ et $f(n)$, la Transformée de la convolution circulaire (1) peut s'écrire :

$$\hat{h}(n) = h'(n).f(n)$$

avec    $\hat{h}(n)$ $TFD^{-1}$ sur N points de $\hat{H}(k)$    $h'(n)$ $TFD^{-1}$ sur N points de $H'(k)$    $f(n)$ $TFD^{-1}$ sur N points de $F(k)$

Cette méthode d'interpolation nécessitera donc les trois opérations successives suivantes :

- TFD inverse pour obtenir les $h'(n)$ et $f(n)$ à partir des $H'(k)$ et $F(k)$ (passage du domaine fréquentiel au domaine temporel).
- Produit de $h'(n)$ par $f(n)$.
- TFD directe pour obtenir les $\hat{H}(k)$ à partir des $\hat{h}(n)$ (passage du domaine temporel au domaine fréquentiel).

Il est souhaitable de choisir pour N une puissance de 2 afin de réaliser facilement les opérations de TFD.

L'invention propose un procédé de diffusion améliorée, permettant également de faciliter une démodulation cohérente. On a vu en effet qu'il était nécessaire de bien distinguer les éléments de référence du bruit.

Pour cela, on augmente à l'émission la puissance des porteuses de référence par rapport aux porteuses transportant de l'information. Le nombre de porteuses de référence N/R étant relativement faible par rapport au nombre total N, la diminution incidente de l'efficacité en puissance du système est donc minime.

Par exemple, ces porteuses de référence peuvent avoir une puissance comprise entre 1,2 et 2 fois la puissance associée aux autres porteuses.

## Revendications

1. Procédé de diffusion d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,

   ledit signal numérique comprenant des éléments de référence, de valeur et de position dans ledit espace temps-fréquence connues du dispositif de démodulation, **caractérisé en ce qu'**il attribue sélectivement aux porteuses portant des éléments de référence une puissance supérieure à celle utilisée pour les porteuses portant des éléments d'information utile.

2. Procédé selon la revendication 1, **caractérisé en ce que** lesdites porteuses portant des éléments de référence présentent une puissance comprise entre 1,2 et 2 fois la puissance associée aux porteuses portant des éléments d'information utile.

3. Emetteur d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,

   ledit signal numérique comprenant des éléments de référence, de valeur et de position dans ledit espace temps-fréquence connues du dispositif de démodulation, **caractérisé en ce qu'**il comprend des moyens d'émission desdites porteuses attribuant sélectivement aux porteuses portant des éléments de référence une puissance supérieure à celle utilisée pour les porteuses portant des éléments d'information utile.

4. Signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,
ledit signal numérique comprenant des éléments de référence, de valeur et de position dans ledit espace temps-fréquence connues du dispositif de démodulation, **caractérisé en ce que** lesdites porteuses portant des éléments de référence présentent une puissance supérieure à celle affectée aux porteuses portant des éléments d'information utile.

5. Récepteur d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,
ledit signal numérique comprend des éléments de référence, de valeur et de position dans ledit espace temps-fréquence connues du récepteur,
**caractérisé en ce qu'**il comprend de moyens d'estimation de la réponse du canal de transmission, à partir desdites porteuses portant des éléments de référence, reçues avec une puissance supérieure à celle affectée aux porteuses portant des informations utiles, et délivrant à des moyens de démodulation une estimation de la réponse du canal de transmission, permettant la démodulation desdites porteuses portant des éléments d'information utile.

6. Récepteur selon la revendication 5, **caractérisé en ce que** les dits moyens d'estimation de la réponse du canal de transmission comprennent des moyens de filtrage d'interpolation.

**Patentansprüche**

1. Verfahren zum Senden eines digitalen Signals, das aus im Zeit-Frequenz-Raum verteilten digitalen Elementen gebildet und in Form von Symbolen gesendet wird, die aus einem Multiplex von N orthogonalen Trägerfrequenzen bestehen, wobei die Trägerfrequenzen von einem Satz dieser digitalen Elemente moduliert und gleichzeitig gesendet werden,
wobei das digitale Signal Referenz-, Wert- und Positionselemente im erwähnten Zeit-Frequenz-Raum umfasst, welche der Demodulierungsvorrichtung bekannt sind,
**dadurch gekennzeichnet, dass** es den Referenzelemente tragenden Trägerfrequenzen selektiv eine Leistung zuteilt, die höher ist als die Leistung, welche für die Nutzinformation tragenden Trägerfrequenzen verwendet wird.

2. Verfahren nach Anspruch 1,
**dadurch gekennzeichnet, dass** die Trägerfrequenzen, die Referenzelemente tragen, eine Leistung aufweisen, die zwischen 1,2 und 2 mal so groß wie die Leistung ist, die den Nutzinformation tragenden Trägerfrequenzen zugeordnet ist.

3. Sender eines digitalen Signals, das aus im Zeit-Frequenz-Raum verteilten digitalen Elementen gebildet und in Form von Symbolen gesendet wird, die aus einem Multiplex von N orthogonalen Trägerfrequenzen bestehen, wobei die Trägerfrequenzen von einem Satz dieser digitalen Elemente moduliert und gleichzeitig gesendet werden,
wobei das digitale Signal Referenz-, Wert- und Positionselemente im erwähnten Zeit-Frequenz-Raum umfasst, welche der Demodulierungsvorrichtung bekannt sind,
**gekennzeichnet durch** Emissionsmittel, die den Referenzelemente tragenden Trägerfrequenzen selektiv eine Leistung zuordnet, die höher ist als die Leistung, welche für die Nutzinformation tragenden Trägerfrequenzen verwendet wird.

4. Digitales Signal, das aus im Zeit-Frequenz-Raum verteilten digitalen Elementen gebildet und in Form von Symbolen gesendet wird, die aus einem Multiplex von N orthogonalen Trägerfrequenzen bestehen, wobei die Trägerfrequenzen von einem Satz dieser digitalen Elemente moduliert und gleichzeitig gesendet werden,
wobei das digitale Signal Referenz-, Wert- und Positionselemente im erwähnten Zeit-Frequenz-Raum umfasst, welche der Demodulierungsvorrichtung bekannt sind,
**dadurch gekennzeichnet, dass** die Referenzelemente tragenden Trägerfrequenzen eine Leistung aufweisen, die höher ist als die Leistung, welche den Nutzinformation tragenden Trägerfrequenzen zugeordnet wird.

5. Empfänger eines digitalen Signals, das aus im Zeit-Frequenz-Raum verteilten digitalen Elementen gebildet und in Form von Symbolen gesendet wird, die aus einem Multiplex von N orthogonalen Trägerfrequenzen bestehen, wobei die Trägerfrequenzen von einem Satz dieser digitalen Elemente moduliert und gleichzeitig gesendet werden,
wobei das digitale Signal Referenz-, Wert- und Positionselemente im erwähnten Zeit-Frequenz-Raum umfasst, welche dem Empfänger bekannt sind,

**dadurch gekennzeichnet, dass** es Mittel zum Schätzen der Antwort des Übertragungskanals umfasst, ausgehend von den Referenzelemente tragenden Trägerfrequenzen, welche mit einer Leistung empfangen werden, die höher ist als die Leistung, welche den Trägerfrequenzen zugeordnet wird, die Nutzinformation tragen und den Demodulierungsmitteln eine Schätzung der Antwort des Übertragungskanals liefern, welche das Demodulieren der die Nutzinformation tragenden Trägerfrequenzen ermöglicht.

6. Empfänger nach Anspruch 5,
   **dadurch gekennzeichnet, dass** die Mittel zum Schätzen der Antwort des Sendekanals Filterungs- und Interpolationsmittel umfassen.

**Claims**

1. Method for broadcasting of a digital signal of the type consisting of digital elements distributed in time-frequency space and transmitted in the form of symbols consisting of a multiplex of N orthogonal carrier frequencies modulated by a set of the said digital elements and broadcast simultaneously, the said digital signal comprising reference, value and position elements in the said time-frequency space known by the demodulation device, **characterized in that** it selectively assigns to the carriers carrying reference elements a power greater than that used for the carriers carrying payload information elements.

2. Method according to Claim 1, **characterized in that** the said carriers carrying reference elements have a power between 1.2 and 2 times the power associated with the carriers carrying payload information elements.

3. Transmitter of a digital signal of the type consisting of digital elements distributed in time-frequency space and transmitted in the form of symbols consisting of a multiplex of N orthogonal carrier frequencies modulated by a set of the said digital elements and broadcast simultaneously, the said digital signal comprising reference, value and position elements in the said time-frequency space known by the demodulation device, **characterized in that** it comprises means of transmission of the said carriers selectively assigning to the said carriers carrying reference elements a power greater than that used for the carriers carrying payload information elements.

4. Digital signal of the type consisting of digital elements distributed in time-frequency space and transmitted in the form of symbols consisting of a multiplex of N orthogonal carrier frequencies modulated by a set of the said digital elements and broadcast simultaneously, the said digital signal comprising reference, value and position elements in the said time-frequency space known by the demodulation device, **characterized in that** the said carriers carrying reference elements have a power greater than that assigned to the carriers carrying payload information elements.

5. Receiver of a digital signal of the type consisting of digital elements distributed in time-frequency space and transmitted in the form of symbols consisting of a multiplex of N orthogonal carrier frequencies modulated by a set of the said digital elements and broadcast simultaneously, the said digital signal comprising reference, value and position elements in the said time-frequency space known by the receiver, **characterized in that** it comprises means of estimating the response of the transmission channel from the said carriers carrying reference elements, received with a power greater than that assigned to the carriers carrying payload information, and delivering to demodulation means an estimate of the response of the transmission channel, permitting demodulation of the said carriers carrying payload information elements.

6. Receiver according to Claim 5, **characterized in that** the said means of estimating the response of the transmission channel comprise means of interpolation filtering.